# NEW EUROPEAN PATENT SPECIFICATION

(11) **EP 1 529 709 B2**
(45) Date of publication and mention of the opposition decision: **07.10.2015**
(45) Mention of the grant of the patent: 05.01.2011
(21) Application number: 04026236.2
(22) Date of filing: 05.11.2004
(51) Int. Cl.: B61F 15/20, B61K 9/04, B61K 9/12, G01P 3/44

(54) **Bearing assembly for a railway axle**
Lagervorrichtung für eine Schienenfahrzeugachse
Dispositif de palier pour un essieu ferroviaire

(30) Priority: 07.11.2003 IT TO20030886
(43) Date of publication of application: 11.05.2005
(73) Proprietor: AB SKF, 415 50 Göteborg (SE)
(72) Inventor: Moretti, Roberto, 10020 Cambiano (TO) (IT); Sema, Silvano, 10060 Cercenasco (TO) (IT)
(74) Representative: Kohl, Thomas

(56) References cited:
- EP-A- 0 609 716
- EP-A- 1 211 500
- WO-A-00/51869
- DE-A1- 3 335 885
- ESCHMANN ET AL.: 'Die Wälzlagerpraxis', 1953, VERLAG VON R. OLDENBURG, MÜNCHEN pages 311 - 315
- Die Elektrolokomotiven der Baureihe 181 der DB und ihre aus dem Dienst ausgeschiedenen Schwestern von Michael Ruge, verfügbar unter www.181er.de
- FAG Radsatzlager in der Hochleistungslokomotive "Taurus"; von Januar 00, Publ.-Nr.: WL 97510DA
- Fotographie einer Lok 1016-029 vom 9.3.2002 (verfügbar unter http://upload wikimedia.org/wikipedia/commons/e/e3/Austri a_1016_01.jpg
- Zeichnung AZS160Z.175954. mit Änderungsstand 4.8.1999

## Description

The present invention relates to a bearing assembly for a railway axle.

As a rule, known bearing assemblies for railway axles comprise a rolling-contact bearing mounted about an axis of rotation and supported by a hub of the axle, a support bush located outside of the bearing and coaxially with the axis of rotation, a clamping disc mounted on the end of the hub to clamp the bearing axially on to the hub, and an end inspection cover, which is mounted detachably against the bearing and against the bush to seal off the bearing from the outside and allow periodic inspection and maintenance the bearing. EP 1 211 500 A1 discloses a railway axle bearing assembly according to the preamble of claim 1. The book "Die Wälzlagerpraxis", Munich 1953, from Eschmann et al. describes on page 312 a bearing arrangement where a lid is located against an outer ring of a bearing.

Because of the high safety standards now required in the of above-described bearing assembly applications, the frequency of preventive maintenance work has been further increased with a consequent increase in the costs which is also due to the large number of bearings required for each individual application.

It is an object of the present invention to provide a bearing assembly for railway axles that will allow a increase in the reliability of the said assembly.

The present invention provides a bearing assembly according to claim 1.

The invention will now be described with reference to the attached drawings, which show a non-limiting example of an embodiment thereof, in which:
- Figure 1 shows an end view of a preferred embodiment of a bearing assembly for a railway axle, produced in accordance with the present invention;
- Figure 2 is an axial section through the bearing assembly of Figure 1; and
- Figure 3 is an exploded view, on a larger scale and in axial section, of the bearing assembly of Figure 1.

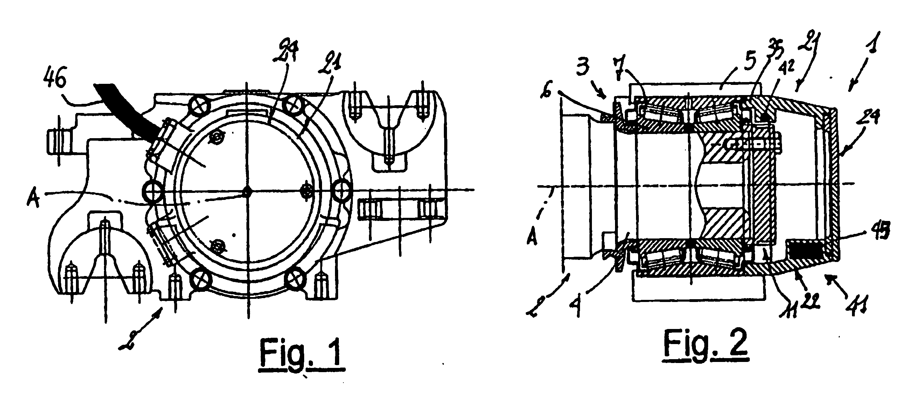

With reference to Figures 1 and 2, 1 is a general reference for the bearing assembly for a railway axle 2.

The assembly 1 comprises a rolling-contact bearing 3 mounted coaxially about an axis A of rotation on a hub 4 of the axle 2 and a support bush 5 located around the outside of the bearing 3 and coaxially with the axis A of rotation.

The bearing 3 comprises an inner ring 6 fixed to the hub 4, an outer ring 7, mounted inside the bush 5, and a protective shield 8 that is located between the two rings 6 and 7 to protect the bearing 3 and that is mounted on the hub 4 at the free end of the hub 4 that is the part bounded by a surface 9 at right angles to the axis A.

The assembly 1 also comprises a clamping disc 11 mounted on the end of the hub 4 to clamp the bearing 3 axially on the hub 4, and an intermediate inspection cover 21 that is mounted detachably against the bearing 3 and against the bush 5 to seal off the bearing 3 from the outside and allow periodic inspection and maintenance of the bearing 3.

Lastly, the assembly 1 comprises a sensor device 41 for monitoring the operating parameters of the bearing 3. This is built into the cover 21.

The clamping disc 11 is mounted against the surface 9 inside the cover 21 and has an annular projection 12 which partly fits down the side of the hub 4, and stops on the shield 8. The disc 11 is also clamped against the surface 9 by one or more screws 15 inserted through this disc 11 and screwed into the hub 4. The disc 11 has a cylindrical external arrangement of teeth 13 on a peripheral surface 16 of the disc 11, coaxial with the axis A. These define a tone wheel 14 to allow the angular velocity of the hub 4 to be detected by the device 41 as will be explained more fully later.

In an embodiment that is not shown, the surface 16 of the disc 11 may not have the teeth 13, and in this case, the tone wheel 14, instead of being identified by the teeth 13, may be defined by a separate component which is fixed on to this surface 16 or mounted with interference on the bearing 3 or on the hub 4, or is closed firmly between the disc 11 and the surface 9, or, lastly, is clamped to the disc 11 by the screws 15.

The cover 21 comprises a support body 22 provided with an access opening 23 and located against the bearing 3, and a cap body 24 closing the said opening 23.

The body 22 is cup-shaped, is positioned such that its concave side is towards the hub 4, and comprises an annular portion 25 - inserted into the bush 5 and located against the ring 7 - and a conical portion 26 that is integral with and adjacent to the portion 25 and tapers in the outward direction to define the opening 23.

The body 24 is defined by a slice 27. This is oriented at right angles to the axis A, is inserted into the opening 23, and has a lateral gasket 28 to hermetically seal the opening 23.

In an embodiment that is not illustrated but can easily be derived from the foregoing, the slice 27 may also form a single body with the body 22.

The cover 21 also includes three housings 32, 33 and 34, of which the housing 32 is formed in an axial abutment edge 35 of annular shape on the annular portion 25, while the housing 33 is formed in a radial projection 36, which is located inside the cover 21 and projects radially inwards towards the axis A so that the housing 33 is directly adjacent to the tone wheel 14.

The housing 34, meanwhile, is located basically in the opening 23 and is enclosed in a hollow body 37 integral with the conical portion 26.

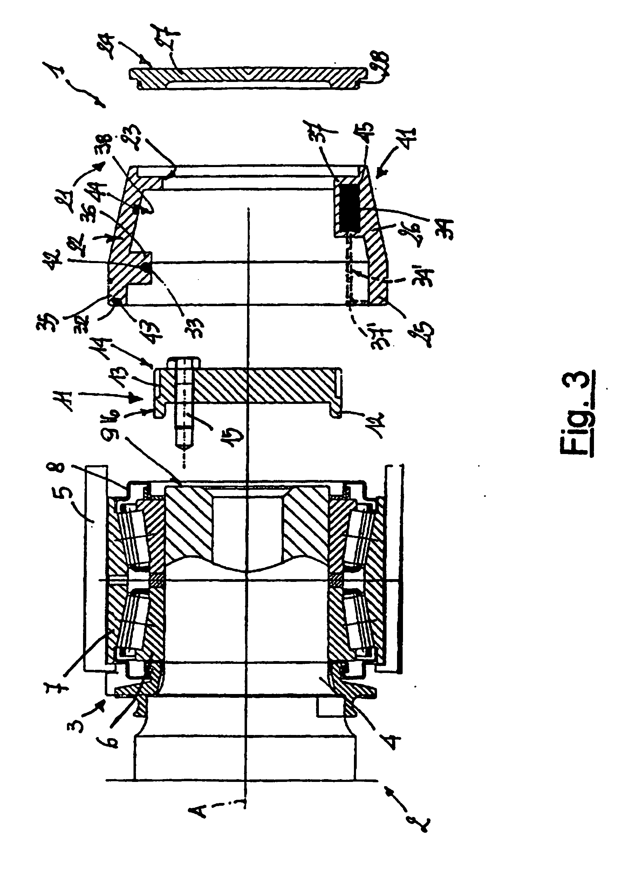

In the example of an embodiment illustrated in Figure 3, the housing 32 and the housing 33 are defined by respective blind holes formed in the edge 35 or in the projection 36. However, depending on the design, these housings 32 and 33 may nonetheless be defined by respective grooves extended around an arc of a circle or all the way around the axis A. In this second case, the projection 36 will also extend all the way around the axis A, thereby defining an annular ridge inside the cover 21.

In an alternative embodiment shown in broken lines in Figure 3, the hollow body 37, in this instance denoted 37', may extend axially past the conical portion 26, along the annular portion 25 and as far as the edge 35, thus being radially adjacent to the tone wheel 14 and axially adjacent to the bearing 2. In this version, the sensors 42 and 43 and the accelerometers 44 may all be housed in a single housing 34' together with the unit 45, thus further simplifying the construction of the assembly 1.

The device 41 which, as previously described, is built completely into the cover 21, comprises a sensor 42 which detects the angular velocity of the bearing 3 and is mounted inside the housing 33 adjacent to the tone wheel 14, and a sensor 43 which detects the operating parameters of the bearing 3, such as, for example, the temperature, and is located inside the housing 32 adjacent to the bearing 3.

The device 41 comprises one or more axial or triaxial accelerometers 44 that are capable of detecting the vibrations of the assembly 1 and are located in the housings 32 and 33 together with the sensors 43 and 42, or are mounted in their own housings 38 formed in the body 22, or are attached by known methods to the inside of the body 22, depending on the high-frequency response obtainable which is notoriously variable owing to the addition or reduction of the rigidity of the method of attachment.

In much the same way as described for the housings 32 and 33, the housings 38 may also be defined by individual blind holes, or by individual grooves extending along arcs of circles of limited amplitude or alternatively, extending all the way round the axis A.

Depending on monitoring requirements, the sensors 42 and 43 and the accelerometers 44 may be defined by individual components for local readings, located inside the blind housings 33, 32 and 38, or may be defined by arrays of sensors in housings 33, 32 and 38 forming an arc of a circle.

The device 41 also includes an electronic control unit 45 provided with wiring inside the cover 21 for its connection to the sensors 42 and 43 and the accelerometers 44, and it is located inside the housing 34. The electronic unit 45 is designed to condition and process the signals arising from the sensors 42 and 43 and from the accelerometers 44, and has a connection 46 leading out of the cover 21 to pass on the data from the sensors 42 and 43 and from the accelerometers 44, as well as to power the sensors 42, 43 and the accelerometers 44.

The integration of the device 41 into the cover 21 has two substantial advantages: in the first place it makes it possible to monitor the operation of the bearing 3, communicating the operating parameters of the bearing 3 in real time and making it possible for maintenance to be carried out only at the most suitable and necessary moment. Secondly, the device 41 can easily be removed and repositioned during maintenance work, ensuring precise repositioning of the sensors 42, 43 and of the accelerometers 44 afterwards.

What is more, the sensors 42 and 43 and the accelerometers 44, while being built into the cover 21 can be replaced individually in the event of failure, without the need to replace the entire cover 21.

It will be understood that the invention is not limited to the embodiment described here and illustrated, which is to be regarded as an example of an embodiment of the bearing assembly for a railway axle, to which further modifications may be made as regards shapes and arrangements of parts, constructional details and manner of assembly.

## Claims

1. Railway axle bearing assembly (1) comprising
a roller bearing (3) mounted about an axis (A) of rotation and supported by a hub (4) of the axle (2),
whereby the bearing comprises an outer ring (7) mounted inside a bush (5),
an inspection cover (21),
which is mounted detachably against the bearing (3)
to seal off the bearing (3) from the outside
and allow periodic inspection and maintenance of the bearing and
sensor means (41) for sensing the operating parameter of the bearing (3),
which sensor means (4) are built into the cover (21)
in order constantly to monitor the operating parameters of the bearing (3),
**characterized in that**
the inspection cover (21) comprises an annular portion (25),
which is inserted into the bush (5) and
located against the outer ring (7), wherein the sensor means (41) comprise a sensor (42) which detects the angular velocity of the bearing (3) and is mounted inside a housing (33) of the cover adjacent to a tone wheel (14) of the assembly, and a sensor (43) which detects the temperature of the bearing (3) and is located inside a housing (32) of the cover adjacent to the bearing (3), wherein the last mentioned housing (32) is formed in an axial abutment edge (35) of annular shape on the annular portion (25).

2. Bearing assembly according to claim 1, **characterized in that** it comprises a clamping disc (11) that is mounted on the end of the hub (4) to clamp the bearing axially on the hub (4), and the tone wheel (14) being combined with the clamping disc (11).

3. Bearing assembly according to claim 2, **characterized in that** the clamping disc (11) comprises external teeth (13) defining the tone wheel (14).

4. Bearing assembly according to one of the preceding claims, **characterized in that** the cover (21) comprises a support portion (22) provided with an access opening (23) and located against the bearing (3), and a cap portion (24) closing the access opening (23); the sensor means (41) being integrated into the support portion (22).

5. Bearing assembly according to claim 4, **characterized in that** the sensor means (41) comprise the sensor (42) for detecting the angular velocity of the bearing (3) mounted inside a corresponding first containment housing (33); the cover (21) comprising a projecting support element (36) which is located inside the support portion (22) and includes the first containment housing (33).

6. Bearing assembly according to one of the preceding claims, **characterized in that** the cover (21) comprises a third containment housing (34) located essentially in a support portion (22) of the cover (21); the sensor means (41) comprising an electronic control unit (45) located inside the third containment housing (34).

7. Bearing assembly according to one of the preceding claims, **characterized in that** the sensor means (41) comprise at least one accelerometer (44) for detecting the vibrations of the assembly (1) mounted inside a corresponding fourth containment housing (38), recessed into the cover (21) or also inside the first housing (33), or inside the second housing (32), or inside the third housing (34).

## Patentansprüche

1. Lagervorrichtung (1) für eine Schienenfahrzeugachse, wobei die Vorrichtung ein auf einer Drehachse (A) montiertes und durch eine Nabe (4) der Achse (2) abgestütztes Rollenlager (3), wobei das Lager einen im Inneren einer Buchse (5) montierten Außenring (7) umfasst, einen Inspektionsdeckel (21), der abnehmbar gegen das Lager (3) montiert ist, um das Lager (3) zur Umgebung hin abzudichten sowie eine regelmäßige Inspektion und Wartung des Lagers zuzulassen, und Sensormittel (41) umfasst, um die Betriebsparameter des Lagers (3) abzufühlen, wobei die Sensormittel (41) in den Deckel (21) eingebaut sind, um die Betriebsparameter des Lagers (3) konstant zu überwachen,
**dadurch gekennzeichnet, dass**
der Inspektionsdeckel (21) einen ringförmigen Abschnitt (25) umfasst, der in die Buchse (5) eingelassen und gegen den Außenring (7) angeordnet ist, wobei die Sensormittel (41) einen Sensor (42), der die Winkelgeschwindigkeit des Lagers (3) erfasst und in einem Gehäuse (33) des Deckels in der Nähe eines frequenzbestimmenden Rads (14) der Vorrichtung montiert ist, und einen Sensor (43) umfassen, der die Temperatur des Lagers (3) erfasst und in einem Gehäuse (32) des Deckels in der Nähe des Lagers (3) angeordnet ist, wobei das letztgenannte Gehäuse (32) in einem axialen ringförmigen Anschlagrand (35) am ringförmigen Abschnitt (25) gebildet ist.

2. Lagervorrichtung nach Anspruch 1, **dadurch gekennzeichnet, dass** sie eine Klemmscheibe (11), die am Ende der Nabe (4) montiert ist, um das Lager axial auf der Nabe (4) zu befestigen umfasst, und wobei das frequenzbestimmende Rad (14) mit der Klemmscheibe (11) kombiniert ist.

3. Lagervorrichtung nach Anspruch 2, **dadurch gekennzeichnet, dass** die Klemmscheibe (11) externe Zähne (13) umfasst, die das frequenzbestimmende Rad (14) definieren.

4. Lagervorrichtung nach einem der vorstehend aufgeführten Ansprüche, **dadurch gekennzeichnet, dass** der Deckel (21) einen Stützabschnitt (22), der mit einer Zugangsöffnung (23) ausgestattet und gegen das Lager (3) angeordnet ist, sowie einen Kappenabschnitt (24) umfasst, der die Zugangsöffnung (23) verschließt, wobei die Sensormittel (41) in den Stützabschnitt (22) integriert sind.

5. Lagervorrichtung nach Anspruch 4, **dadurch gekennzeichnet, dass** die Sensormittel (41) den Sensor (42) umfassen, um die Winkelfrequenz des Lagers (3) zu ermitteln, der im Inneren eines entsprechenden ersten Sicherheitsgehäuses (33) montiert ist, wobei der Deckel (21) ein vorspringendes Stützelement (36) umfasst, das sich im Inneren des Stützabschnitts (22) befindet und das erste Sicherheitsgehäuse (33) beinhaltet.

6. Lagervorrichtung nach einem der vorstehend aufgeführten Ansprüche, **dadurch gekennzeichnet, dass** der Deckel (21) ein drittes Sicherheitsgehäuse (34) umfasst, das sich im Wesentlichen in einem Stützabschnitt (22) des Deckels (21) befindet, wobei die Sensormittel (41) ein elektronisches Steuergerät (45) umfassen, das sich im Inneren des dritten Sicherheitsgehäuses (34) befindet.

7. Lagervorrichtung nach einem der vorstehend aufgeführten Ansprüche, **dadurch gekennzeichnet, dass** die Sensormittel (41) mindestens einen Beschleunigungsmesser (44) umfassen, um die Vibrationen der Vorrichtung (1) zu ermitteln, der im Inneren eines entsprechenden vierten Sicherheitsgehäuses (38) montiert, mit Rücksprung in den Deckel (21) eingelassen oder auch im Inneren des ersten Gehäuses (33) oder im Inneren des zweiten Gehäuses (32) oder im Inneren des dritten Gehäuses (34) vorgesehen ist.

## Revendications

1. Ensemble de palier pour essieu ferroviaire (1) comprenant un palier à roulements (3) monté autour d'un axe de rotation (A) et supporté par un moyeu (4) de l'essieu (2), le palier comprenant une bague extérieure (7) montée à l'intérieur d'une douille (5), un couvercle d'inspection (21), qui est monté de manière détachable contre le palier (3) pour sceller le palier (3) par rapport à l'extérieur et permettre une inspection périodique ainsi qu'une maintenance du palier, et des moyens de capteur (41) pour détecter le paramètre de fonctionnement du palier (3), lesquels moyens de capteur (41) sont incorporés dans le couvercle (21) afin de surveiller constamment les paramètres de fonctionnement du palier (3),
**caractérisé en ce que**
le couvercle d'inspection (21) comprend une portion annulaire (25), qui est insérée dans la douille (5) et située contre la bague extérieure (7), les moyens de capteur (41) comprenant un capteur (42) qui détecte la vitesse angulaire du palier (3) et qui est monté à l'intérieur d'un boîtier (33) du couvercle en position adjacente à une roue à induction (14) de l'ensemble, et un capteur (43) qui détecte la température du palier (3) et qui est situé à l'intérieur d'un boîtier (32) du couvercle en position adjacente au palier (3), ledit boîtier (32) étant formé dans un bord de butée axial (35) de forme annulaire sur la portion annulaire (25).

2. Ensemble de palier selon la revendication 1, **caractérisé en ce qu'**il comprend un disque de serrage (11) qui est monté sur l'extrémité du moyeu (4) pour serrer le palier axialement sur le moyeu (4), et une roue à induction (14) étant combinée au disque de serrage (11).

3. Ensemble de palier selon la revendication 2, **caractérisé en ce que** le disque de serrage (11) comprend des dents extérieures (13) définissant la roue à induction (14).

4. Ensemble de palier selon l'une quelconque des revendications précédentes, **caractérisé en ce que** le couvercle (21) comprend une portion de support (22) pourvue d'une ouverture d'accès (23) et située contre le palier (3), et une portion de capuchon (24) fermant l'ouverture d'accès (23) ; les moyens de capteur (41) étant intégrés dans la portion de support (22).

5. Ensemble de palier selon la revendication 4, **caractérisé en ce que** les moyens de capteur (41) comprennent le capteur (42) pour détecter la vitesse angulaire du palier (3) monté à l'intérieur d'un premier boîtier de réception correspondant (33) ; le couvercle (21) comprenant un élément de support en saillie (36) qui est situé à l'intérieur de la portion de support (22) et qui comporte le premier boîtier de réception (33).

6. Ensemble de palier selon l'une quelconque des revendications précédentes, **caractérisé en ce que** le couvercle (21) comprend un troisième boîtier de réception (34) situé essentiellement dans une portion de support (22) du couvercle (21) ; les moyens de capteur (41) comprenant une unité de commande électronique (45) située à l'intérieur du troisième boîtier de réception (34).

7. Ensemble de palier selon l'une quelconque des revendications précédentes, **caractérisé en ce que** les moyens de capteur (41) comprennent au moins un accéléromètre (44) pour détecter les vibrations de l'ensemble (1) monté à l'intérieur d'un quatrième boîtier de réception correspondant (38), en retrait dans le couvercle (21) ou également à l'intérieur du premier boîtier (33), ou à l'intérieur du deuxième boîtier (32), ou à l'intérieur du troisième boîtier (34) .
